# EUROPEAN PATENT APPLICATION

(11) **EP 1 762 552 A1**
(43) Date of publication of application: **14.03.2007**
(21) Application number: 06118453.7
(22) Date of filing: 04.08.2006
(51) Int. Cl.: C04B 41/86, A01N 59/16

(54) **Coating article and manufacturing process**

(30) Priority: 12.09.2005 IT MO20050231
(71) Applicant: Casalgrande Padana S.p.a., 42013 Casalgrande (IT)
(72) Inventor: Manfredini, Mauro, 42019, Scandiano (RE) (IT)
(74) Representative: Crugnola, Pietro

(57) **Abstract**

The process for producing bactericide coating articles comprising ions of at least a bactericide substance comprises the phases of preparing a paste or a mixture of ceramic materials, forming said ceramic articles with said paste or mixture, firing formed ceramic articles; said preparing comprises adding to said paste or mixture at least a bactericide substance that is amalgamable with said ceramic materials.

In a variation, the process provides for applying to a visible surface of the already pressed article a solution containing a bactericide substance.

The coating article incorporates ions of bactericide substance in the entire mass thereof or near the visible surface thereof.

## Description

The invention relates to a process and coating article obtainable with the process, suitable for creating a constant bactericide action on coated surfaces.

The ceramics industry produces a range of articles, more precisely tiles, which are intended to cover walls and floors of buildings, used both as dwellings and industrial production facilities, or as public meeting places such as, for example, swimming pools or gymnasia, provided with toilet facilities for the users.

In the case of buildings that are intended exclusively as dwellings, the requirements that are demanded of the tiles are essentially two: a pleasing appearance and great mechanical resistance to impacts.

On the other hand, in the case of tiles intended to cover surfaces of industrial buildings, in addition to the two previous requirements, specific technical features are required in relation to the type of activity that is conducted inside these buildings.

For this reason, tiles have for example been produced that are able to insulate from magnetic interference walls and floors of rooms in which electronic systems are installed for data processing.

Other types of manufactured tiles, when they are hit by light, are able to generate constantly ions of oxygen by means of a photosensitive process: these ions oxidise polluting agents, improving the state of the external and internal environment where they are laid, for the entire time during which they are hit by the light; these tiles are thus suitable for covering surfaces of buildings and walkways where the degree of pollution is very high.

Still other tiles are produced that enable guiding walkways to be created for blind people.

In swimming pools tiles are used to cover the pools and the surrounding zones thereof, which must also have particular features, such as, for example, a non-slip surface to give the feet a good grip, even if they are wet.

A problem that occurs in many buildings used as dwellings or for industrial use or as washing and toilet facilities, and also in sporting facilities such as swimming pools, is the presence of high concentrations of bacteria.

The elimination, or at least the reduction of such concentrations of bacteria is entrusted, when necessary, to disinfection and sterilisation interventions by tasked personnel who, by means of suitable apparatuses, spray walls and floors with disinfecting and sterilising substances; these tasks have to be performed with periodic frequency to maintain a good degree of sterilisation.

In particular cases, sterile environments are also created that are isolated from the exterior and which, whenever a person has to enter them, require a complicated and inconvenient sterilising process of both the persons and of any things that may have to be introduced to be conducted.

This prior art has some drawbacks.

A drawback is that, in the case of swimming pools, or public conveniences, the creation of closed sterile environments is objectively impossible.

Another drawback is that the water that stagnates on the edges of swimming pools, or in toilets, is a vehicle for conveying bacteria and an element for the proliferation thereof.

A further drawback is that, as said, in order to maintain satisfactory environmental sterility, it is necessary to perform treatments with sterilising substances at periodical frequencies and using suitable operators and apparatuses.

An object of the invention is to improve the prior art.

Another object of the invention is to realise a process and coating article obtainable with the process that enables a bactericide action to be maintained where the article is placed that is substantially constant over time, without the need to conduct sterilisation interventions periodically.

According to an aspect of the invention there is provided a process suitable for producing bactericide ceramic articles comprising the steps of preparing a paste or a mixture of ceramic materials, forming ceramic articles with said paste or mixture, firing formed ceramic articles, characterised in that said preparing comprises adding to said paste or mixture at least a bactericide substance that is amalgamable with said ceramic materials.

According to another aspect of the invention there is provided a process suitable for producing bactericide ceramic articles comprising the steps of preparing a paste or a mixture of ceramic materials, forming ceramic articles with said paste or mixture, firing formed ceramic articles, characterised in that it further comprises, after said forming and before said firing, applying to a surface of said ceramic article a solution containing a bactericide substance.

According to a further aspect of the invention, there is provided a coating article characterised in that it incorporates ions of at least a bactericide substance.

The process and the coating article that are obtainable with the process thus enable coated surfaces to be obtained that have a substantially constant bactericide action over time as there is no release of ions of the bactericide substance incorporated in the article but simple interaction with bacteria with which the article comes into contact.

Further features and advantages of the invention will become clearer from the disclosure of an embodiment of a process suitable for producing bactericide coating articles illustrated by way of example in the attached drawings, in which:
Figure 1 is a flow chart of the actuation steps of the process according to a first embodiment;
Figure 2 is a flow chart of the actuation steps of the process according to a second embodiment;
Figure 3 is a flow chart of the actuation steps of the process according to a third embodiment;
Figure 4 is a flow chart of the actuation steps of the process according to a fourth embodiment.

With reference to Figures 1 and 2, 1, 2, 3, 4 indicate schematically magazines containing ceramic materials and 5 indicates a magazine containing powder with silver ions.

In detail, the magazine 1 contains montmorillonitic, illitic and kaolin clays in powder; the magazine 2 contains quartz sands; the magazine 3 contains feldspar in powder; the magazine 4 contains pigments based on metal oxides; the container 6 contains organic and/or inorganic additives.

The materials contained in the magazines from 1 to 4 are removed from the latter and mixed together as indicated in the box 7, in the following percentages:
- montmorillonitic, illitic and kaolin clays from 25% al 45%;
- feldspar from 35% to 50%;
- quartz and feldspar sands from 15% to 25%;
- metal-oxide based pigments from 1% to 10%;
- organic and/or inorganic additives from 1% to 10%.

Subsequently, as indicated in box 8, the mixture of ceramic materials is subjected to wet or dry grinding that enables greater granulometric finess to be obtained to homogenise it and obtain greater compactness in the final phase of firing the article.

According to a first embodiment of the process, during grinding powder is introduced containing ions of silver in a percentage comprised between 0.05% and 5%.

Subsequently, the mixture obtained is subjected to drying (or so-called "atomisation") to eliminate the water, as indicated in the box 9.

In detail, drying occurs inside dryers in which the temperature is maintained at between 500C° and 600C° and in which the wet ground mixture is nebulised at a pressure of 25/30 atmospheres: in this way the water present in the suspension evaporates in a substantially instantaneous manner, transforming the mixture into granules suitable for the subsequent forming phase.

At this point the dried mixture is ready to be introduced into the moulds of a press or into other forming devices, to be subjected, as indicated in box 10, to forming according to the known technics.

This forming gives rise to raw articles, which are then subjected to drying and subsequent firing, as indicated in box 11.

It should be pointed out that during pressing and forming of the articles it is possible to apply liquid or powder decorations to surfaces of articles that are intended to be "on view".

The coating article that is obtainable with the disclosed process is a ceramic article made of stoneware that has silver ions distributed through the entire mass.

According to another embodiment of the process that is suitable for producing bactericide coating articles illustrated in Fig. 2, the powder containing ions of silver is added to the mixture of ceramic materials after atomisation during loading of the ceramic materials into the press, for example when forming of the article occurs with double loading or with double pressing: in this case the coating articles obtained have silver ions distributed substantially near a visible surface thereof and not in the entire mass.

The powder containing silver ions can also be mixed with the ceramic materials during the atomisation phase so as to obtain a mixture of ceramic materials already containing the powder of silver ions.

According to a further embodiment of the process according to the invention, shown in Fig. 3, a solution containing silver ions, in a proportion comprised, for example, between 0.1% and 2%, contained in a magazine 5a, is applied to the visible surface of the so-called green ceramic article, i.e. immediately after pressing, before drying of the pressed article, indicated in the box 10a, that precedes the firing thereof in the kiln. The coating articles obtained have silver ions distributed substantially near the visible surfaces thereof, but for a depth in the mass of ceramic material suitable for ensuring the presence thereof in the surface of the article and thus the maintenance of the antibacterial properties even after the article has been subjected to surface processing such as, for example, polishing, lapping, silking and the like.

According to a still further embodiment of the process according to the invention, said solution of silver ions is applied to the visible surface of the raw article, i.e. after drying subsequent to pressing of the article, but before firing in the kiln thereof.

Also in this case the coating articles obtained have silver ions distributed substantially near the visible surfaces thereof, as in the previous case, also after possible surface processing of the article.

## Claims

**1.** Process, suitable for producing bactericide coating articles, comprising the steps of preparing a paste or a mixture of ceramic materials, forming said ceramic articles with said paste or mixture, firing formed ceramic articles, **characterised in that** said preparing comprises adding to said paste or mixture at least a bactericide substance that is amalgamable with said ceramic materials.

**2.** Process according to claim 1, wherein said adding occurs during an atomising step of said ceramic materials.

**3.** Process, suitable for producing bactericide coating articles, comprising the steps of preparing a paste or a mixture of ceramic materials, forming said ceramic articles with said paste or mixture, firing formed ceramic articles, **characterised in that** it further comprises applying to a visible surface of said article a solution containing at least a bactericide substance.

**4.** Process according to any one of claims 1 to 3, wherein said at least a bactericide substance comprises silver ions.

**5.** Process according to claim 3, or 4, wherein said solution is applied to said article after the forming step and before the drying step that precedes the firing step.

**6.** Process according to claim 3, or 4, wherein said solution is applied to said article after the drying step that precedes the firing step.

**7.** Process according to any one of claims 2 to 6, wherein said solution contains a quantity of silver ions comprised between 0.1% and 2%.

**8.** Process according to any preceding claim wherein said ceramic materials comprise: montmorillonitic clays, illitic clays, kaolin clays, quartz sands, feldspar, metal oxide type pigments.

**9.** Process according to any preceding claim wherein before said forming said ceramic materials are ground to obtain ground materials.

**10.** Process according to claim 9 wherein said grinding comprises wet grinding.

**11.** Process according to claim 10 wherein after said wet grinding said ground materials are dried.

**12.** Process according to claim 9 wherein said grinding comprises dry grinding.

**13.** Process according to any preceding claim wherein before said forming said adding is provided for.

**14.** Process according to any preceding claim wherein said forming comprises extruding said paste with extruding apparatuses.

**15.** Process according to any one of claims 1 to 14 wherein said forming comprises pressing said mixture in press moulds.

**16.** Process according to any one of claims 1 to 15 wherein said firing comprises introducing ceramic articles formed in firing kilns at temperatures such as to make said ceramic components melt.

**17.** Process according to claim 16 wherein said temperatures are comprised between 1100 °C and 1300 °C.

**18.** Coating article **characterised in that** it incorporates ions of at least a bactericide substance.

**19.** Article according to claim 19 wherein said ions are silver ions.

**20.** Article according to claim 19 wherein said silver ions are distributed substantially in the entire mass of said article.

**21.** Article according to claim 18 wherein said silver ions are distributed near a surface of said article, to a depth sufficient to ensure the presence of said ions on said surface, even after said surface has been subjected to surface processing.

**21.** Article according to any one of claims 17 to 20 wherein said article is a ceramic article.

**22.** Article according to any one of claims 17 to 21 wherein said ceramic article is made of stoneware.
